# FASCICULE DE BREVET EUROPEEN

(11) **EP 1 356 992 B1**
(45) Date de publication et mention de la délivrance du brevet: **26.10.2005**
(21) Numéro de dépôt: 03290995.4
(22) Date de dépôt: 23.04.2003
(51) Int. Cl.: B60R 5/04

(54) **Tablette arrière comprenant des moyens de canalisation d'air et véhicule automobile correspondant**
Hutablage mit Lufteinrichtung und Kraftfahrzeug mit einer solchen Ablage
Parcel shelf with air canalisation means and motor vehicle comprising such a shelf

(30) Priorité: 26.04.2002 FR 0205313
(43) Date de publication de la demande: 29.10.2003
(73) Titulaire: Faurecia Automotive Industrie, 92000 Nanterre (FR)
(72) Inventeur: Boudoy, Marianne, 25460 Etupes (FR); Duval, Arnaud, 08000 Charleville-Mezieres (FR); Dubois, Thomas, 08200 Sedan (FR)
(74) Mandataire: Domenego, Bertrand

(56) Documents cités:
- FR-A- 2 600 600
- PATENT ABSTRACTS OF JAPAN vol. 017, no. 652 (M-1520), 3 décembre 1993 (1993-12-03) -& JP 05 213234 A (MAZDA MOTOR CORP), 24 août 1993 (1993-08-24)
- PATENT ABSTRACTS OF JAPAN vol. 1998, no. 10, 31 août 1998 (1998-08-31) -& JP 10 129525 A (NISSAN MOTOR CO LTD), 19 mai 1998 (1998-05-19)

## Description

La présente invention concerne une tablette arrière destinée à séparer l'habitacle d'un compartiment arrière de chargement d'un véhicule automobile, la tablette étant du type comprenant des moyens de canalisation d'air de l'habitacle vers le compartiment arrière.

Les moyens de canalisation d'air d'une telle tablette permettent d'évacuer l'air de l'habitacle et ainsi d'assurer le renouvellement de l'atmosphère de l'habitacle.

Cependant, ces moyens de canalisation d'air permettent à des ondes acoustiques provenant du compartiment arrière de se propager vers l'habitacle du véhicule.

De tels moyens de canalisation engendrent donc des nuisances sonores dans l'habitacle.

FR-2 600 600 décrit une tablette du type précité qui permet de réduire le bruit transmis du compartiment arrière vers l'habitacle par les moyens de canalisation d'air.

Pour cela, les moyens de canalisation d'air forment une voie unique d'écoulement offrant des moyens de réflexion des ondes acoustiques en vue de diminuer le niveau sonore dans l'habitacle.

JP-5/213 234, qui correspond au préambule de la revendication 1, décrit une tablette arrière délimitant un passage d'air divergeant de l'arriont vers l'aval afin de réduire la transmission sonore.

Toutefois, les bruits transmis du compartiment arrière vers l'habitacle restent importants, notamment les bruits de roulement.

Un but de l'invention est de résoudre ce problème en fournissant une tablette du type précité qui permette de réduire plus efficacement dans l'habitacle les bruits provenant du compartiment arrière, notamment les bruits de roulement.

A cet effet, l'invention a pour objet une tablette selon la revendication 1.

Selon des modes particuliers de réalisation, la tablette peut comprendre l'une ou plusieurs des caractéristiques des revendications dépendantes.

L'invention a en outre pour objet un véhicule automobile selon la revendication 8.

L'invention sera mieux comprise à la lecture de la description qui va suivre, donnée uniquement à titre d'exemple, et faite en se référant aux dessins annexés, sur lesquels :
- la figure 1 est une vue schématique, partielle et en perspective de l'extrémité arrière d'un véhicule automobile selon l'invention,
- la figure 2 est une vue schématique en perspective éclatée de la tablette arrière du véhicule de la figure 1,
- la figure 3 est une vue schématique, partielle et en perspective, illustrant la structure des moyens de canalisation d'air de la tablette de la figure 2 ;
- la figure 4 est une vue schématique latérale illustrant également la structure des moyens de canalisation d'air ; et
- la figure 5 est une vue analogue à la figure 4 illustrant une variante de la tablette des figures 1 à 4.

Dans tout ce qui suit, les orientations utilisées sont les orientations habituelles d'un véhicule automobile. Ainsi, les termes « avant », « arrière », « droite » et « gauche » s'entendent par rapport à la position d'un conducteur du véhicule automobile et à son sens de marche.

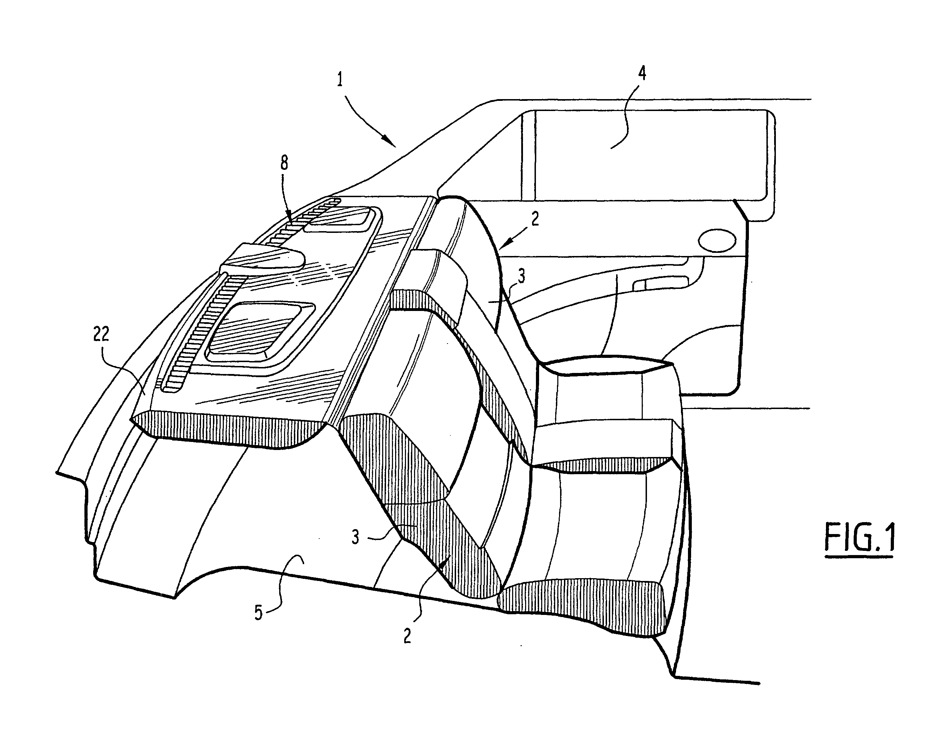

On a représenté sur la figure 1 l'extrémité arrière 1 d'un véhicule automobile. On y distingue les sièges arrière 2 dont les dossiers 3 délimitent en partie d'une part l'habitacle 4 du véhicule automobile et d'autre part le coffre 5 ou compartiment arrière de réception d'un chargement et en particulier de bagages.

L'extrémité arrière 1 comprend, à l'arrière des dossiers 3 des sièges 2, une tablette 8 de séparation de l'habitacle 4 du coffre 5. Cette tablette 8 permet en outre de masquer le contenu du coffre 5.

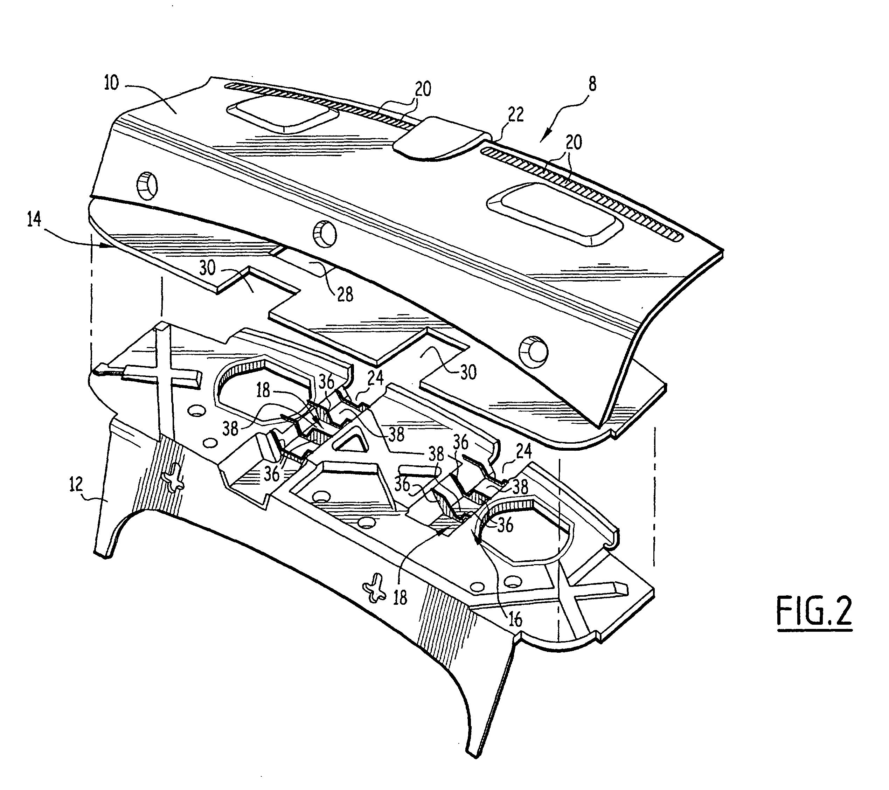

Comme illustré plus particulièrement par la figure 2, la tablette 8 comprend une paroi supérieure 10, une paroi inférieure 12 et une paroi intermédiaire 14 disposée entre la paroi supérieure 10 et la paroi inférieure 12.

Les parois 10, 12 et 14 sont réalisées par exemple en matière plastique thermoformée. Elles sont fixées les unes aux autres par exemple par soudage, collage...

Les parois 10, 12 et 14 délimitent des moyens 16 de canalisation d'air sous forme de deux conduits 18 espacés latéralement l'un de l'autre.

Bien que n'étant pas identiques, les structures des conduits 18 droit et gauche sont sensiblement analogues. Ainsi, seule la structure du conduit 18 droit sera décrite en se référant aux figures 2 à 4.

Le conduit 18 relie une série d'ouvertures d'entrée d'air 20, ménagées dans la paroi supérieure 10 au niveau du bord arrière 22 de la tablette 8, à une ouverture de sortie d'air 24 délimitée par les bords arrière de la paroi inférieure 12 et de la paroi intermédiaire 14.

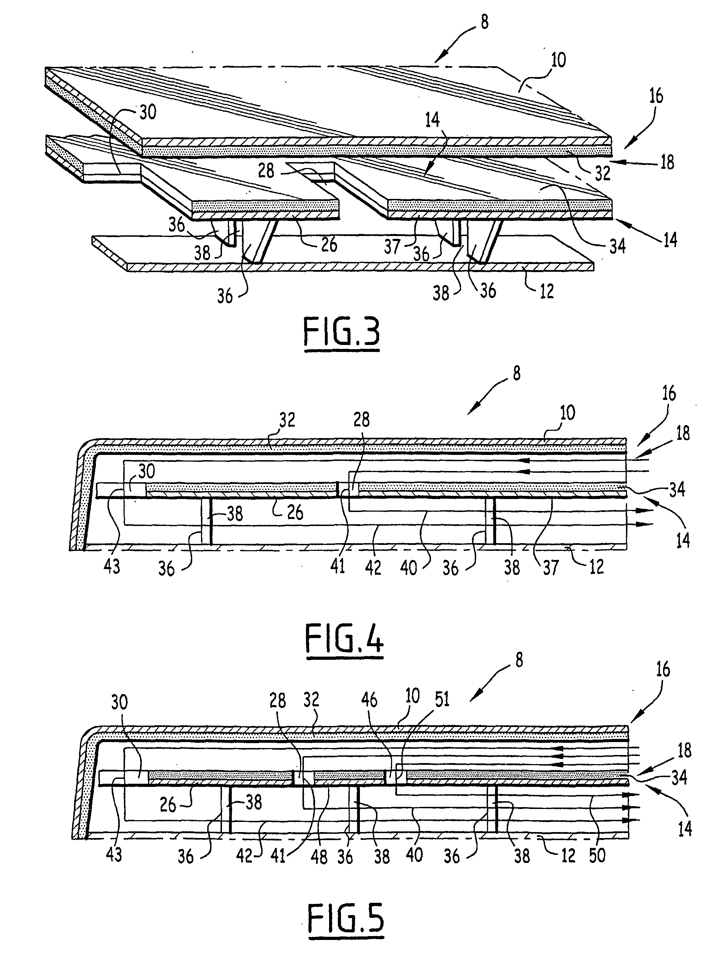

Le conduit 18 comprend depuis les ouvertures d'entrée 20 droites jusqu'à l'ouverture de sortie 24 droite un tronçon non-représenté convergeant vers l'avant. Le conduit 18 s'étend ensuite horizontalement vers l'avant entre la paroi supérieure 10 et la paroi intermédiaire 14, comme on le voit sur les figures 3 et 4.

Le conduit 18 se sépare ensuite en deux demi-conduits qui passent de part et d'autre d'une région avant 26 de la paroi 14 respectivement au travers d'une fente 28 ménagée dans la paroi 14 et d'un décrochement 30 prévu à l'avant de la paroi 14.

Les deux demi-conduits se rejoignent en aval de la région avant 26, et plus précisément au droit de la fente 28, pour former à nouveau un conduit unique qui s'étend horizontalement vers l'arrière jusqu'à l'ouverture de sortie 24 droite.

Comme on le voit sur les figures 3 et 4, la face inférieure de la paroi supérieure 10 est recouverte d'une couche 32 d'un matériau insonorisant, c'est-à-dire absorbant les ondes acoustiques.

De même, la face supérieure de la paroi intermédiaire 14 est revêtue d'une couche 34 d'un matériau insonorisant.

Un tel matériau insonorisant peut par exemple être un matériau textile, tel qu'un feutre, ou une mousse.

On notera également que la paroi inférieure 12 est munie sur sa face supérieure de nervures 36 qui délimitent entre elles, d'une part sous la région avant 26 de la paroi intermédiaire 14, et d'autre part sous la région 37 de la paroi intermédiaire 14 située en arrière de la fente 28, deux étranglements 38 dans le conduit 18. Comme on le voit sur la figure 2, les étranglements 38 sont décalés latéralement l'un de l'autre et forme ainsi une chicane.

Le conduit 18 fournit deux voies d'écoulement pour l'air de l'habitacle 4 depuis les ouvertures d'entrée 20 droites jusqu'à l'ouverture de sortie 24 droite.

Une première voie d'écoulement d'air est matérialisée par la flèche 40 sur la figure 4. Cette voie 40 s'étend longitudinalement vers l'avant entre les parois supérieure 10 et intermédiaire 14 jusqu'à la fente 28 où la voie d'écoulement 40 présente un coude 41 formant point de rebroussement.

Ensuite, cette première voie d'écoulement 40 s'étend longitudinalement vers l'arrière entre la paroi intermédiaire 14 et la paroi inférieure 12, en passant au travers de l' étranglement 38 arrière.

La deuxième voie d'écoulement est matérialisée par la flèche 42 sur la figure 4. Elle s'étend entre la paroi supérieure 10 et la paroi intermédiaire 14 jusqu'au décrochement avant 30 où la voie d'écoulement 42 présente un coude 43 formant point de rebroussement.

Ensuite, la deuxième voie d'écoulement 42 s'étend longitudinalement vers l'arrière entre la paroi intermédiaire 14 et la paroi inférieure 12, en passant au travers des deux étranglements 38.

La région avant 26 de la paroi intermédiaire 14 forme donc une cloison interne du panneau 8 qui délimite les voies d'écoulement 40 et 42. Ces voies d'écoulement 40 et 42 se séparent donc en amont de la région 26 et se rejoignent en aval de celle-ci.

Comme on le voit sur la figure 4, les deux voies d'écoulement 40 et 42 ont des longueurs différentes.

Les voies d'écoulement 40 et 42 de chaque conduit 18 permettent de canaliser l'air de l'habitacle 4 vers le coffre 5 et ainsi de renouveler l'atmosphère de l'habitacle 4 par évacuation d'air vers le coffre 5.

De préférence, les dimensions des fentes 28 et des décrochements 30 sont choisies pour que sensiblement un même débit d'air s'écoule par chaque voie d'écoulement d'un même conduit 18.

La structure du conduit 18 gauche se distingue principalement de celle du conduit 18 droit par le fait que sa deuxième voie d'écoulement 42 à une longueur inférieure à celle du conduit 18 droit.

Pour autant, la transmission d'ondes sonores via les conduits 18 du coffre 5 vers l'habitacle 4 est limitée.

Cette transmission d'ondes sonores est limitée tout d'abord en raison de la présence dans chaque conduit 18 de deux voies d'écoulement 40 et 42 de longueurs différentes.

En effet, les ondes acoustiques se propageant depuis le coffre 4 dans les conduits 18 empruntent les deux voies d'écoulement 40 et 42 en s'y propageant dans le sens opposé au sens d'écoulement de l'air.

Les voies d'écoulement 40 et 42 ayant des longueurs différentes, les trajets de propagation des ondes acoustiques sont également différents. Ainsi, pour un même conduit 18, les ondes acoustiques qui se rejoignent au droit de la fente 28 en amont de celle-ci, si l'on considère le sens d'écoulement d'air, ou en aval de celle-ci, si l'on considère le sens de propagation des ondes acoustiques, interfèrent de manière destructive pour certaines fréquences et en particulier pour les fréquences comprises entre 400 et 1200 Hz.

La limitation de la transmission sonore est également obtenue, de manière indépendante, grâce aux étranglements 38 qui délimitent, en aval de ceux-ci par rapport au sens de propagation des ondes acoustiques, des chambres d'expansion. L'atténuation de la transmission sonore obtenue grâce à ces deuxièmes moyens est également importante pour les moyennes fréquences.

Les couches 32 et 34 permettent en outre, et ce de manière indépendante, de limiter encore la transmission sonore vers l'habitacle 4, puisqu'elles délimitent en partie les voies d'écoulement 40 et 42. On notera en particulier que la présence des couches 32 au niveau des coudes 43 des deuxièmes voies d'écoulement 42 permet d'atteindre une atténuation sonore accrue. L'effet procuré par les couches 32 et 34 est surtout notable pour les fréquences supérieures à 3000 Hz.

Ainsi, la transmission sonore du coffre 5 vers l'habitacle 4 via les conduits 18 est limitée, notamment en ce qui concerne les bruits de roulement, qui correspondent principalement à des fréquences comprises entre 800 et 1000 Hz, et les bruits de moteur qui correspondent notamment à une bande de fréquences comprises entre 400 et 4000 Hz.

La figure 5 illustre une variante du conduit des figures 3 et 4 où une fente arrière 46 a été ménagée dans la paroi intermédiaire 14 en arrière de la fente avant 28. Les fentes 28 et 46 délimitent entre elles une région intermédiaire 48 de la paroi intermédiaire 14.

Cette région intermédiaire 48 forme une deuxième cloison interne de sorte que le conduit 18 offre en plus des deux voies d'écoulement 40 et 42 une troisième voie d'écoulement 50 qui forme un coude de rebroussement 51 en passant par la fente 46.

De manière plus générale, une tablette selon l'invention peut ne pas comprendre de couches 32 et 34 de matériaux insonorisants. De même, une telle tablette 8 peut ne pas présenter d'étranglement 38.

De manière plus générale, les moyens 16 de canalisation définiront au moins deux voies d'écoulement d'air qui se rejoignent et qui offrent des propriétés différentes de propagation d'ondes acoustiques provenant du compartiment arrière 5 afin de créer des interférences destructives.

Dans les exemples décrits ci-dessus, ces différentes propriétés sont obtenues grâce à des longueurs différentes des voies d'écoulement.

On notera que dans des autres modes de réalisation, ces propriétés différentes pourront être obtenues en utilisant des voies d'écoulement de même longueur mais ayant des formes différentes ou contenant des milieux de propagation différents.

## Revendications

1. Tablette arrière (8) destinée à séparer l'habitacle (4) d'un compartiment arrière de chargement (5) d'un véhicule automobile, la tablette étant du type comprenant des moyens (16) de canalisation d'air de l'habitacle vers le compartiment arrière, **caractérisée en ce que** les moyens de canalisation comprennent au moins une cloison interne (26 ; 26, 48) à la tablette (8) délimitant à l'intérieur de la tablette (8) au moins deux voies d'écoulement d'air (40, 42 ; 40, 42, 50) se séparant en amont et se rejoignant en aval de la cloison à l'intérieur de la tablette (8), les deux voles d'écoulement offrant des propriétés différentes de propagation d'ondes acoustiques provenant du compartiment arrière.

2. Tablette selon la revendication 1, **caractérisée en ce que** les deux voies d'écoulement (40, 42 ; 40, 42, 50) possèdent des longueurs différentes.

3. Tablette selon la revendication 1 ou 2, **caractérisée en ce que** les moyens (16) de canalisation comprennent au moins une couche interne (32, 34) d'absorption d'ondes acoustiques, la couche interne délimitant au moins en partie une des voies d'écoulement (40, 42 ; 40, 42, 50).

4. Tablette selon l'une des revendications précédentes, **caractérisée en ce qu'**au moins une voie d'écoulement (40, 42 ; 40, 42, 50) comprend un coude (41, 43; 41, 43, 51).

5. Tablette selon les revendications 3 et 4 prises ensemble, **caractérisée en ce que** la couche interne d'absorption d'ondes acoustiques (32, 34) est disposée dans le coude (41, 43 ; 41, 43, 51).

6. Tablette selon l'une des revendications précédentes, **caractérisée en ce qu'**au moins une voie d'écoulement (40, 42 ; 40, 42, 50) possède au moins un étranglement (38).

7. Tablette selon l'une des revendications précédentes, **caractérisée en ce qu'**elle comprend une paroi supérieure (10), une paroi inférieure (12) et une paroi intermédiaire (14) disposée entre la paroi supérieure (10) et la paroi inférieure (12), les parois délimitant les voies d'écoulement (40, 42 ; 40, 42, 50) et la paroi intermédiaire formant la cloison interne (26 ; 26, 48).

8. Véhicule automobile comprenant un habitacle (4), un compartiment arrière de chargement (5) et une tablette (8) de séparation de l'habitacle (4) du compartiment arrière de chargement (5), **caractérisé en ce que** la tablette arrière (8) est une tablette selon l'une quelconque des revendications précédentes.

## Claims

1. Rear shelf (8) intended to separate the cabin (4) from a rear luggage compartment (5) of a motor vehicle, the shelf being of the type comprising means (16) of channelling air from the cabin to the rear compartment, **characterised in that** the channelling means comprise at least one partition (26; 26, 48) internal to the shelf (8), delimiting inside the shelf (8) at least two air flow ways (40, 42; 40, 42, 50) separating upstream and rejoining each other downstream of the partition inside the shelf (8), the two flow ways offering different properties for the propagation of sound waves coming from the rear compartment.

2. Shelf according to claim 1, **characterised in that** the two flow ways (40, 42; 40, 42, 50) have different lengths.

3. Shelf according to claim 1 or 2, **characterised in that** the channelling means (16) comprise at least one internal sound-wave absorption layer (32, 34), the internal layer at least partly delimiting one of the flow ways (40, 42; 40, 42, 50).

4. Shelf according to one of the preceding claims, **characterised in that** at least one flow way (40, 42; 40, 42, 50) comprises an elbow (41, 43; 41, 43, 51).

5. Shelf according to claims 3 and 4 taken together, **characterised in that** the internal sound-wave absorption layer (32, 34) is disposed in the elbow (41, 43; 41, 43, 51).

6. Shelf according to one of the preceding claims, **characterised in that** at least one flow way (40, 42; 40, 42, 50) has at least one contraction (38).

7. Shelf according to one of the preceding claims, **characterised in that** it comprises a top wall (10), a bottom wall (12) and an intermediate wall (14) disposed between the top wall (10) and the bottom wall (12), the walls delimiting the flow ways (40, 42; 40, 42, 50) and the intermediate wall forming the internal partition (26; 26, 48).

8. Motor vehicle comprising a cabin (4), a rear luggage compartment (5) and a shelf (8) separating the cabin (4) from the rear luggage compartment (5), **characterised in that** the rear shelf (8) is a shelf according to any one of the preceding claims.

## Patentansprüche

1. Hintere Ablage (8), die dazu bestimmt ist, die Fahrgastzelle (4) von einem hinteren Laderaum (5) eines Kraftfahrzeugs abzutrennen, wobei die Ablage von der Bauart ist, die Einrichtungen (16) zur Kanalisierung von Luft von der Fahrgastzelle zum hinteren Raum umfasst, **dadurch gekennzeichnet, dass** die Kanalisierungseinrichtungen mindestens eine zur Ablage (8) gehörende Trennwand (26; 26, 48) umfassen, die im Inneren der Ablage (8) mindestens zwei Luftdurchflusswege (40, 42; 40, 42, 50) abgrenzt, die sich oberhalb der Trennwand im Inneren der Ablage (8) trennen und unterhalb der Trennwand im Inneren der Ablage wieder aufeinandertreffen, wobei die beiden Durchflusswege unterschiedliche Eigenschaften zur Verbreitung von Schallwellen aufweisen, die aus dem hinteren Raum stammen.

2. Ablage nach Anspruch 1, **dadurch gekennzeichnet, dass** die beiden Durchflusswege (40, 42; 40, 42, 50) unterschiedliche Längen besitzen.

3. Ablage nach Anspruch 1 oder 2, **dadurch gekennzeichnet, dass** die Kanalisierungseinrichmngen (16) mindestens eine Innenschicht (32, 34) zur Schallwellendämpfung umfassen, wobei die Innenschicht einen der Durchflusswege (40, 42; 40, 42, 50) zumindest teilweise abgrenzt.

4. Ablage nach einem der vorhergehenden Ansprüche, **dadurch gekennzeichnet, dass** mindestens ein Durchflussweg (40, 42; 40, 42, 50) ein Winkelstück (41, 43; 41, 43, 51) umfasst.

5. Ablage nach den Ansprüchen 3 und 4 zusammengenommen, **dadurch gekennzeichnet, dass** die Innenschicht (32, 34) zur Schallwellendämpfung im Winkelstück (41, 43; 41, 43, 51) angeordnet ist.

6. Ablage nach einem der vorhergehenden Ansprüche, **dadurch gekennzeichnet, dass** mindestens ein Durchflussweg (40, 42; 40, 42, 50) eine Verengung (38) umfasst.

7. Ablage nach einem der vorhergehenden Ansprüche, **dadurch gekennzeichnet, dass** sie eine obere Wand (10), eine untere Wand (12) und eine Zwischenwand (14) umfasst, die zwischen der oberen Wand (10) und der unteren Wand (12) angeordnet ist, wobei die Wände die Durchflusswege (40, 42; 40, 42, 50) abgrenzen und die Zwischenwand die innere Trennwand (26; 26, 48) bildet.

8. Kraftfahrzeug mit einer Fahrgastzelle (4), einem hinteren Laderaum (5) und einer Ablage (8) zum Abtrennen der Fahrgastzelle (4) vom hinteren Laderaum (5), **dadurch gekennzeichnet, dass** die hintere Ablage (8) eine Ablage nach einem der vorhergehenden Ansprüche ist.
